# EUROPEAN PATENT SPECIFICATION

(11) **EP 2 047 379 B1**
(45) Date of publication and mention of the grant of the patent: **08.02.2012**
(21) Application number: 06821659.7
(22) Date of filing: 24.12.2006
(51) Int. Cl.: H04L 12/58, H04L 12/28

(54) **DISTRIBUTED EDGE NETWORK**
VERTEILTES EDGE-NETZWERK
RÉSEAU DE BORDURE DISTRIBUÉ

(30) Priority: 27.07.2006 US 833475 P
(43) Date of publication of application: 15.04.2009
(73) Proprietor: ConteXtream Ltd., 49527 Petach-Tikva (IL)
(72) Inventor: BARKAI, Sharon, Los Altos, CA 91024 (US)
(74) Representative: Vossius & Partner
(86) International application number: PCT/IL2006/001476
(87) International publication number: WO 2008/012790

(56) References cited:
- US-A1- 2003 093 463
- US-A1- 2004 071 164
- US-A1- 2004 120 261
- US-A1- 2004 233 845
- US-B1- 6 216 173

## Description

### FIELD OF THE INVENTION

The present invention relates to network routers generally and to edge routers in particular.

### BACKGROUND OF THE INVENTION

Communications networks are ubiquitous. The Internet is everywhere and carriers are attempting to provide more and more services over it to their customers.

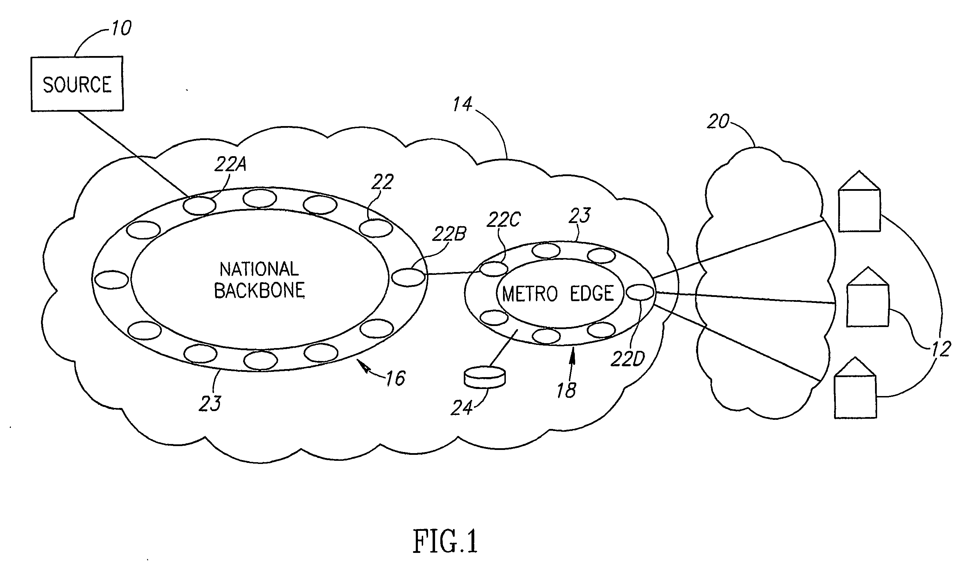

Reference is now made to Fig. 1, which illustrates how a signal from a source 10 is distributed to customers 12 over the Internet 14. Source 10 might be, for example, a broadcast news station or a movie channel. The Internet 14, or any other wide area network (WAN), is typically organized into different levels of networks. There typically is a national backbone network 16 and multiple metro edge networks 18. Small metropolitan areas may have a single edge network, as shown, while larger metropolitan areas may have a central edge network with smaller sub-networks. Finally, each customer 12 may be connected to the Internet 14 via access networks 20. The latter are typically low bandwidth, copper connections, while national backbone 16 and edge networks 18 may be formed from high bandwidth, optical fibers.

Networks 16 and 18 typically are formed of multiple points of presence (POPs) 22 connected, with "bus" connectivity, in a ring 23 of optical fibers. Due to the bus connection, each POP 22 can write directly to any other POP 22 in the ring. This minimizes the number of POPs through which any piece of data has to travel.

When source 10 sends a datastream, such as a movie or a news show, to customers 12 on the other side of the country, source 10 first transmits the datastream to its POP, labeled 22A. POP 22A may be part of national backbone 16, as shown, or it may be a metro area POP. In any case, POP 22A may write the datastream directly to POP 22B, which may be the POP in national backbone 16 associated with the metro edge network 18 serving customers 12. POP 22B may then pass the datastream to POP 22C, the POP in metro edge network 18 serving national backbone 16, and POP 22C may write the datastream to POP 22D, the POP serving customers 12.

Large datastreams are cached, either in one of POPs 22 or on a server 24 associated with metro edge networks 18, to ensure that the content be as close as possible to the final destination (otherwise, the download of such large datastreams would take an unreasonable amount of time). Due to the bus connections between POPs 22, any of them can directly access server 24 and thus, each POP can deliver the datastream at a reasonable speed to its customers 12.

Inside each POP 22 are servers, edge routers and other communications equipment, where the edge routers typically route the datastreams and/or data packets. A POP 22 typically has many edge routers, to route the different services provided through the POP, as each type of service has to be routed and buffered properly to match its required upstream and downstream rates.

Voice services, which include standard telephony as well as VoIP (voice over IP), are low bandwidth but they cannot easily handle jitter. These services also include the common branch exchange (pabX) operations of hold, conference, transfer, voicemail, etc. Each voice conversation does not require significant bandwidth;

Video services generate high bandwidth, high rate datastreams. The amount of allowable packet loss varies with the type of service. Such services include standard television, high definition television, time-shifted television, video-on-demand and nPVR (network personal video recording).

Data services include Internet access as well as virtual private networks (VPNs) of many different types. Data services typically are bursty services, which require high fidelity (i.e. little packet loss) and medium rates.

A virtual private network is a group network which runs over the public communication networks but is accessible only to the members of the group. Such a private network is 'virtual' since the network it runs on is not privately owned, but it is private since only group members have access to it. VPNs are common for companies who either have remote offices and/or allow their employees to work at home or in other locations. VPNs are also utilized to provide VoIP services to defined groups, such as a company or a group of people.

US Patent 6,216,173 teaches a method of content processing and routing in which content aware intelligent routing uses an arrangement of buffers to which services can be assigned.

US Patent Application No. 2004/071164 teaches a communication system operating method, which involves operating an edge router to detect assignment of IP address of media access control address in a data portion and to create an entry in an address resolution table of the assigned IP address

US Patent Application No. 2003/093463 teaches a dynamic distribution and network storage system, which has a network that transmits data between connections, and circulates data between connections to store data.

### Summary of the Invention

According to one aspect of the present invention there is provided a router for a packet network, comprising:
a plurality of mailbox units (46) holding at least a portion of data packet buffering mailboxes (22), said router defining said mailboxes for a network, characterized in that:
   each mailbox is defined for a session of one service being sent to one subscriber (50); and
   further characterized by a plurality of external interface units (44) to forward incoming packets to a mailbox unit of said network via hash results on service header information of said packets and to forward outgoing packets from mailboxes of said mailbox unit to their associated subscribers.

According to a second aspect of the present invention there is provided a method comprising:
within a network router:
   forwarding incoming data packets to network-level data packet buffering mailboxes (22), wherein each mailbox is defined for a session of one service sending to one subscriber, said forwarding comprising hashing service header information of said packets; and
   forwarding packets from said mailboxes to their respective associated subscribers (50).

Further, in accordance with a preferred embodiment of the present invention, the writing unit can include a DMA (direct memory access) or an rDMA (remote DMA) unit

Still further, in accordance with a preferred embodiment of the present invention, the writing unit includes a unit to write a large datastream to one mailbox in each the mailbox unit of the network.

Moreover, in accordance with a preferred embodiment of the present invention, the external interface unit includes a unit to read from at least one mailbox stored in either a local mailbox unit or a remote mailbox unit within the network.

Further, in accordance with a preferred embodiment of the present invention, the services include at least one of the following types of services: point-to point, point-to-multipoint and multipoint-to-multipoint.

Still further, in accordance with a preferred embodiment of the present invention, the external interface unit includes a unit to generate a local mailbox with qualities of a global mailbox for services which allow roaming.

Finally, there is also provided, in accordance with a preferred embodiment of the present invention, a mailbox unit including a multiplicity of mailboxes and a unit to manage buffering and quality of service requirements of the mailboxes and their existence. Each mailbox stores data for a service provided over a network.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is a schematic illustration of a wide area network having an edge network therein;

Fig. 2 is a schematic illustration of a plurality of types of mailboxes forming part of an edge network, constructed and operative in accordance with a preferred embodiment of the present invention;

Fig. 3 is a schematic illustration of a table of services, useful in the edge network of the present invention; and

Figs. 4, 5 and 6 are schematic illustrations of the edge network of the present invention and its operations.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Embodiments of the present invention may include apparatus for performing the operations herein. This apparatus may be specially constructed for the desired purposes, or it may comprise a general-purpose computer selectively activated or reconfigured by a computer program stored in the computer. Such a computer program may be stored in a computer readable storage medium. The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

Applicant has realized that much of the complexity of edge networks may be reduced by concentrating on the services to be provided rather than on the topology of the network and/or the line configuration. This may significantly simplify the operation as well as the type of hardware used for edge routers.

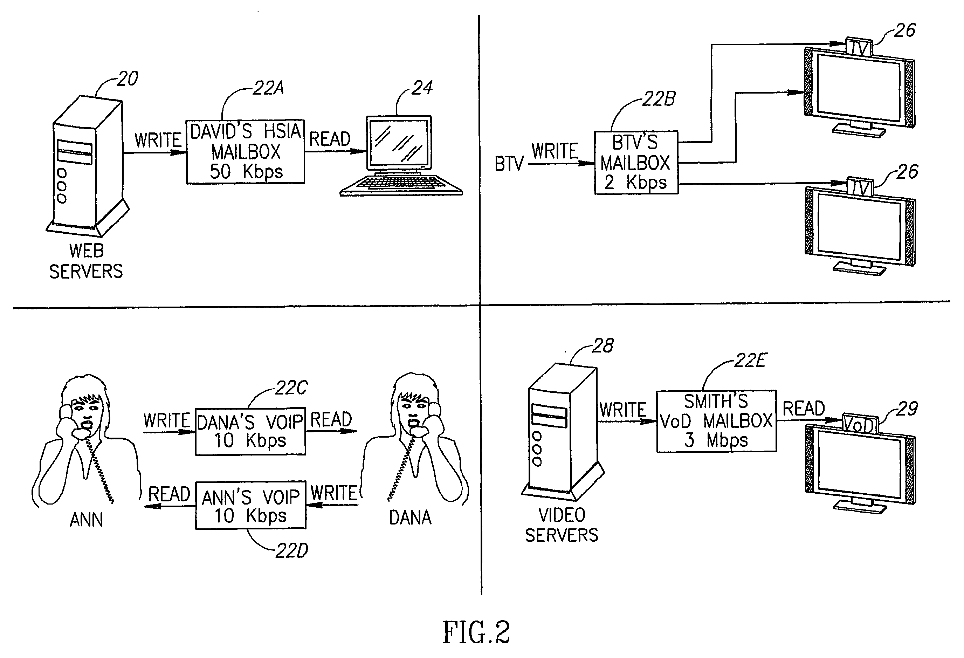

As shown in Fig. 2, to which reference is now made, for each service, the edge network of the present invention may allocate a mailbox 22 whose size and quality of service (defined at least by latency, bandwidth, download rates, security control, etc.) may be a function of the amount of data to be transferred therethrough at any given time. Mailboxes 22 may act as buffers, where data may be written in at one end and read out at the other end.

For example, as shown in Fig. 2, a customer, David Smith, may have a high speed Internet connection with which he may access various web servers 20. This service is known as HSIA (high speed internet access) and, in David's case, may be at a download speed of 50Kbps, with a medium security level, best effort bandwidth. The edge network may designate a medium size mailbox, labeled 22A, for David's downloading HSIA service and another mailbox (not shown) for his upstream service. Web servers 20 may write all packets directed to David into one end of mailbox 22A and David's computer, labeled 24, may read those packets from the other end of mailbox 22A

David may also have ordered cable news service BTV from his carrier. Like all other subscribers for this service, David's set top box 26 may continually read from mailbox 22B as the BTV news company may continually write to it Since this is a video service, mailbox 22B may be large enough to sustain 2Mbps download rates with minimal packet loss and high priority to reduce latency. Moreover, mailbox 22B may serve all or a portion of the subscribers to this service, as the subscribers may have read access to mailbox 22B. Thus, there may be little security on mailbox 22B.

David may also have voice over IP (VoIP) telephones. Fig. 2 shows his daughter, Dana, talking to her friend, Ann. Because mailboxes are one way, the network may have allocated separate mailboxes for each person. Thus, Ann may have mailbox 22D and Dana may have mailbox 22C, both with a 10Kbps rate. These are relatively small mailboxes as the amount of data is considerably less than a video download However, the security level of these mailboxes 22 may be high and the allowed jitter level may be low.

Finally, the Smith family may have a video on demand (VoD) service from which they order videos from video servers 28. For this service, the network may have allocated a 3Mbps mailbox 22E to which the relevant video server 28 may send the video and from which the Smith family's VoD set-top box 29 may read the video. The security level of mailbox 22E may be high and the allowed packet loss may be low.

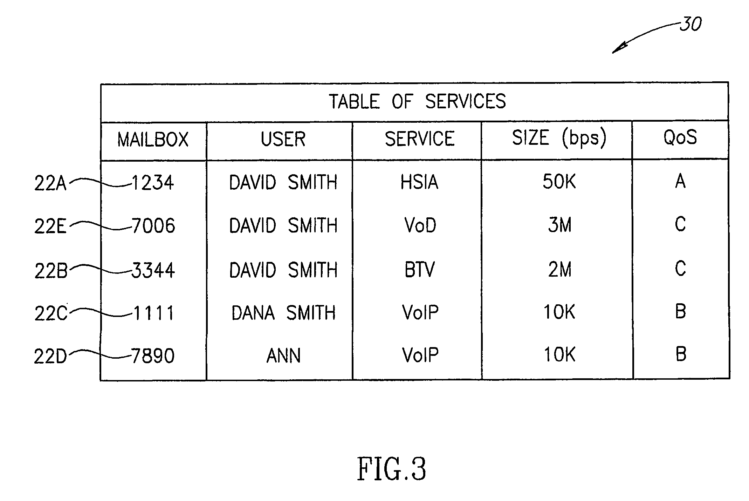

The allocation of mailboxes may be straightforward from tables of services that the carriers maintain anyway. Such tables may exist for billing, for customer service, for bandwidth allocation, etc. The edge network of the present invention may access such tables to define the size and quality of service (QoS) requirements for its mailboxes 22 and may store such information in its own table 30 of services, shown in Fig. 3, to which reference is now made.

Table 30 of services may list the number of each mailbox 22, its user, the selected service(s), the size of the mailbox, and the quality of service requirements. The latter may be a specific rating or one of a plurality of set types. In the example of Fig. 3, there are three qualities, listed as A, B and C. For example, mailbox 22A for David's HSIA connection, may be numbered 1234, may be of 50Kbps and with an A level of quality of service.

Point-to-point services, like the VoIP or the Internet access, may utilize a mailbox per consumer. These mailboxes may be relatively small. For voice, the quality of service may be of the B type and may require that there be very little jitter. For data, the quality of service may be of the A type which may allow a certain amount of packet loss.

Point-to-multipoint services, like the BTV videostream, a stock market tickertape or other publication services, may utilize a single mailbox for the service that many subscribers may access. For video services, the quality of service, of the C type, may be more stringent, allowing no or a minimal amount of packet loss.

Multipoint-to-multipoint services, like a video conference or carrier supported peer-to-peer file sharing services, may utilize a single mailbox that multiple consumers may write to and that multiple consumers may read from. If these services are video services, they may also be of the C type of service. If the service is a voice conference, the quality of service may be of the B type.

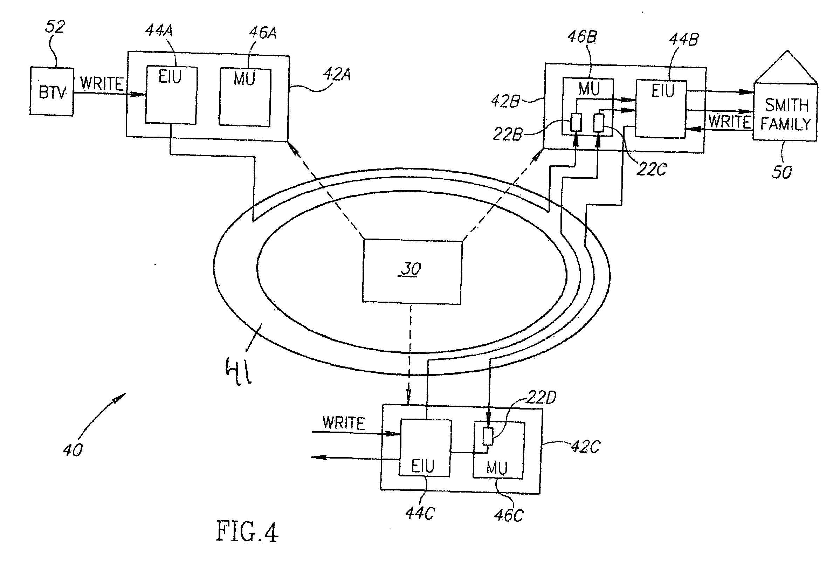

Reference is now made to Fig. 4, which details an exemplary edge network 40, constructed and operative in accordance with a preferred embodiment of the present invention. Edge network 40 may comprise table 30 of services and a multiplicity of points of presence (POPs) 42, of which an exemplary three (with reference letters A, B and C) are shown in Fig. 4. POPs 42 may be connected together with a ring 41.

Each POP 42 may comprise an external interface unit (EIU) 44 and a mailbox unit (MU) 46. Each external interface unit 44 may provide connections to its associated customers and to ring 41 and each mailbox unit 46 may hold and manage mailboxes 22. However, because edge network 40 may be a distributed network, the mailboxes 22 of the associated customers of one external interface unit 44 may not necessarily be stored in the mailbox unit 46 of the same POP 42. The location of each mailbox may be a function of the type of service being provided and whether or not it needs to be located near the customer or near the source for efficient operation.

For each incoming data packet, each external interface unit 44 may determine which mailbox unit 46 may manage the mailbox 22 for the service being transmitted by the data packet. Each external interface unit 44 may perform a hashing function on at least some of the information in a header of the data packet. The resultant hash value may be the mailbox number within edge network 40 for the service carried by the data packet. With the mailbox number, the external interface unit 44 may directly write (typically using remote DMA (rDMA)) the data packet to the indicated mailbox 22.

Mailbox units 46 may comprise a multiplicity of buffers, for the mailboxes, and management units to add and delete mailboxes as required by the table of services 30. Alternatively, mailbox units 46 may comprise a data structure for queues of packets plus housekeeping information such as the rate, quality of service information and where to forward the data stored therein.

It will be appreciated that the allocation of mailboxes may be very dynamic. If necessary, an address resolution protocol may be implemented among external interface units 44 to balance the allocation among mailbox units 46, to ensure that no one mailbox unit 46 has most of mailboxes 22. In this embodiment, the mailbox address may be static, but the mailbox unit 46 which houses the addressed mailbox may be dynamic as the load changes and/or upon insertion or failure of a mailbox unit 46.

When a customer may want the service of a mailbox (i.e. when he wants to watch a video, get the news, access the Internet, join a video conference, etc.), he may login to edge network 40, either through DHCP (dynamic host configuration protocol) for most IP sessions or through IGMP (IP group management protocol) to join a point-to-multi-point session. The external interface unit 44 to which the customer connects may utilize the IGMP addresses to determine the addresses of the mailbox(es) to the multipoint services to which the customer subscribes and may connect the customer to them External unit 44 may utilize the DHCP address to define the point services which the customer desires and may ask the relevant mailbox unit 46 to instantiate all relevant mailboxes for the customer. For the latter action, mailbox unit 46 may check table 30 of services for the connection and quality of service information of the mailboxes. Edge network 40 may then list the instantiated mailbox(es) 22 in table 30. After that, edge network 40 may send all data packets for the requested service to the instantiated mailbox(es) 22.

For example, the Smith Family, labeled 50, may request the news from BTV, labeled 52. BTV 52 may send its video news datastream to POP 42A, the POP closest to it. External interface unit 44A may hash the destination address, that of the Smith Family, and may determine that the Smith Family's mailbox for BTV 52, mailbox 22B, may be located in mailbox unit 46B. Accordingly, external interface unit 44A may write the datastream to mailbox 22B in mailbox unit 46B. When the Smith Family's set-top box may connect to POP 42B, the POP closest to it, mailbox unit 46B may send the packets stored in mailbox 22B to the Smith Family's set-top box, via external interface unit 44B.

For the example of Dana and Ann talking over VoIP, Dana Smith's mailbox 22C may be located in mailbox unit 46B, close to her house, while Ann's mailbox 22D may be located in a different mailbox unit, for example 46C.

When Ann talks on her VoIP telephone, her computer may send her voice datastream to POP 42C, the POP with which she is associated External interface unit 44C may hash the destination address, that of Dana Smith, and may determine that Dana Smith's mailbox for VoIP, mailbox 22C, may be located in mailbox unit 46B. Accordingly, external interface unit 44C may write the datastream to mailbox 22C in mailbox unit 46B and mailbox unit 46B may forward the packets to Dana's VoIP telephone through external interface unit 44B.

Similarly for Ann's half of the conversation. When Dana speaks on her VoIP telephone, her computer may send her voice datastream to here POP, 42B. External interface unit 44B may hash the destination address, that of Ann, and may determine that Ann's mailbox for VoIP, mailbox 22D, may be located in mailbox unit 46C. Accordingly, external interface unit 44B may write the datastream to mailbox 22D in mailbox unit 46C and mailbox unit 46C may forward the packets to Ann's VoIP telephone through external interface unit 44C.

Depending on the type of mailbox 22, the data packet may or may not be deleted from mailbox 22 upon forwarding. Data packets may be deleted only for point-to-point services. All other services may remove packets as a function of time. For such services, the buffers may fill up and the newer data packets may push out the older data packets.

In accordance with a preferred embodiment of the present invention, external interface units 44 and mailbox units 46 may be fairly simple to implement as their operations are not complicated. They read the packet headers, hash an address (some combination of the destination and/or source address, as described hereinbelow) and then write the packet to the relevant mailbox 22. Such operations are relatively simple and thus, do not require very complicated hardware or lookups in large lookup tables. These operations may be done using standard tables, with the header reading being the only operations handled by the CPU (central processing unit) of units 44. The payloads of the data packet may be written using DMA or rDMA protocols. Given these simple operations, external interface units 44 may be implemented on standard personal computers.

Thus, they may be implemented as blade servers, a standard type of server used in server farms, such as for websites. Such servers are standard PCs (personal computer). An exemplary type of blade server is the BladeCenter, manufactured by IBM of the USA. It will be appreciated that such servers are significantly less complicated than the types of proprietary hardware used in the past for edge routers. It will further be appreciated that, in the present invention, adding more services merely involves adding the services to table 30, providing any relevant hashing functions for the data packets of the service and ensuring that there is sufficient storage capacity for the additional mailboxes to be instantiated. The only knowledge needed about the service is the size of the mailboxes needed and the quality of service requirements that the service has.

To read the headers of the data packets, external interface units 44 may have knowledge of the many types of data packets flowing through them. Most data packets have a protocol bit, indicating the type of service or protocol to which the data packet adheres. Upon reading this bit, external interface units 44 may decode the header, according to the protocol, in order to determine the source and destination addresses, which are utilized for the hashing functions.

The hashing functions performed by external interface units 44 may be of any suitable sort, depending on the size of the network and the information available in the incoming data packets. In one embodiment, the hashing function may be a function of the source and/or destination addresses and a broadcast bit also found in the headers of data packets. In this embodiment, if the service is a point-to-multipoint service, as indicated by the broadcast bit, the mailbox for the service may be placed close to the source of the data and thus, the hashing may be performed on the source address. If the service is a multipoint-to-multipoint service, as indicated by the broadcast bit, the mailbox for the service may be placed anywhere and thus, the hashing may be performed on a combination of the source and destination addresses. If the service is a point-to-point service, the hashing may be performed on the source address or on the destination address, as desired An exemplary hashing function may be "modulo 1000".

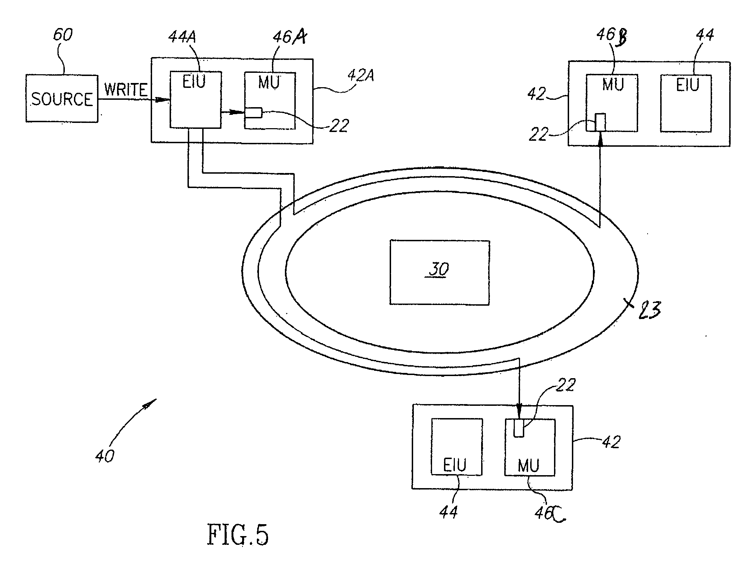

Reference is now made to Fig. 5, which illustrates one improvement of edge network 40 for multi-cast packets. Multi-cast packets are packets which originate at one source but are sent to multiple destinations. Typical multi-cast sources are broadcast services, such as television shows, news shows, etc and/or data from publication services, such as stock market ticker tapes.

In this embodiment, the source, labeled 60, may provide a single datastream to the POP nearest it, for example, POP 42A Since there are a significant number of customers for the datastream located throughout the metropolitan area served by edge network 40, external interface unit 44A may write each data packet of the datastream in a single transmission, as a multi-cast packet, to multiple mailboxes 22, at least one in each mailbox unit 46 of edge network 40. This may ensure that each customer receives the data packet from the POP 42 nearest him. In exemplary Fig. 5, external interface unit 44A is shown writing the data packet to mailboxes 22 in mailbox units 46A, 46B and 46C. It will be appreciated that such multi-cast writing significantly reduces traffic on ring 23.

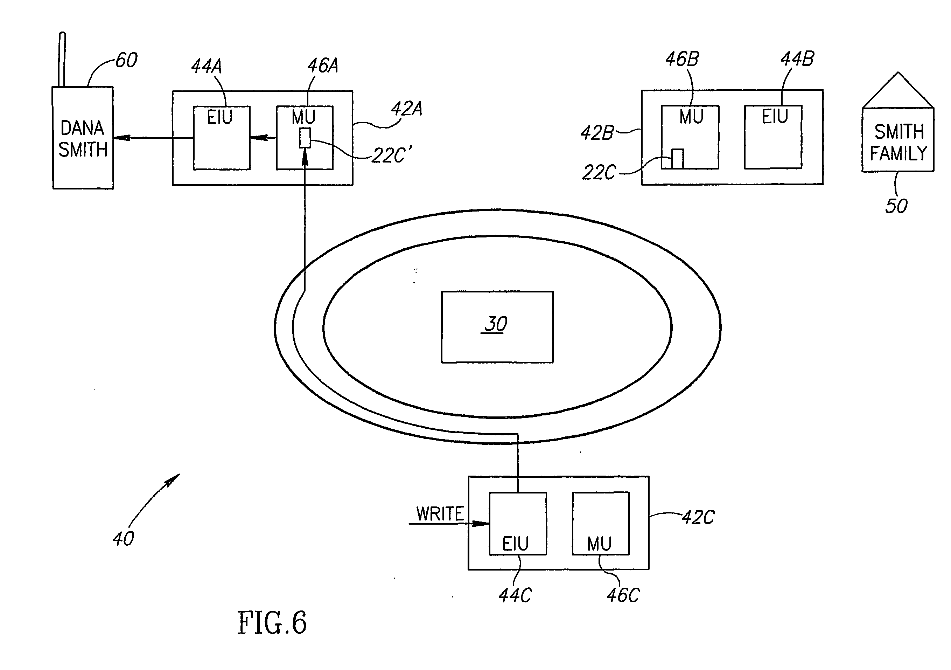

Reference is now made to Fig. 6, which illustrates an alternative operation of edge network 40 for mobile or cellular telephone operation. Since mobile telephones of all types move around the metropolitan area, they may be physically far from their original location and thus, may have difficulties reading their mailboxes. Thus, Dana Smith's mobile device 60 may be close to POP 42A while her house 50 may be close to POP 42B.

In the embodiment of Fig. 6, edge network 40 may generate local mailboxes for mobile devices 60. Each mobile device 60 may have a main mailbox in the POP 42 closest to the device's home location. Thus, Dana's mobile device 60 may have its main VoIP mailbox 22C in mailbox unit 46B. However, when Dana's mobile device 60 may access edge network 40 when it is away from its home location, edge network 40 may attempt to provide it with a local mailbox. The external interface unit that the mobile accessed, unit 44A in Fig. 6, may generate a local mailbox from the global template defined for the main mailbox of the device, which, in this example, is mailbox 22C. The global template may be stored in table 30 of services and the local mailbox information may be registered therein as well.

In accordance with a preferred embodiment of the present invention, administrative domains may be defined over the edge network of the present invention. Each domain may belong to a different vendor and may have its own table of services and its own hashing function but all the domains may utilize the same edge network. As described hereinabove, each domain allows plug and play access connections for devices and for data and media centers. Each device and/or center is added merely by adding the services they offer into the table of services. Moreover, each domain may route traffic anywhere in the metropolitan area, per subscriber per service.

## Claims

1. A router for a packet network, comprising:
a plurality of mailbox units (46) each holding at least a portion of data packet buffering mailboxes (22), said router defining said mailboxes for a network,
**characterized in that**:
each mailbox is defined for a session of one service being sent to one subscriber (50); and
further **characterized by** a plurality of external interface unit (44) to forward incoming packets to one of said mailbox units of said network via hash results on service header information of said packets and to forward outgoing packets from mailboxes of said mailbox unit to their associated subscribers.

2. The router of claim 1, further comprising:
means (30) for managing buffering and quality of service requirements of said mailboxes and their existence.

3. The router according to either of claims 1 and 2 and wherein each said mail box is defined by the buffering and quality of service requirements of its associated service.

4. The router according to any one of the preceding claims and wherein said mailbox units include means for receiving qualities of each said mailbox from network service management tables.

5. The router according to claim 4, comprising a management unit at least to instantiate mailboxes per network service management tables in the presence of network activity.

6. The router according to any one of the preceding claims, and wherein said external interface unit comprises writing means to perform three operations, a read operation of a header of said incoming data, a hash operation on an address of said incoming data to generate a mailbox address and a write operation of said incoming data to said mailbox address.

7. The router according to any one of the preceding claims, and wherein said external interface unit comprises of a DMA (direct memory access) and an rDMA (remote DMA) unit.

8. The router according to any one of the preceding claims and wherein said external interface unit comprises means to write a multicast datastream to one mailbox in one of said mailbox units of said network.

9. A method comprising:
within a network router:
providing mailbox units and external interface units;
receiving data packets at said external interface units;
forwarding incoming data packets from said external interface units to network-level data packet buffering mailboxes (22), wherein each mailbox is defined, within one of said mailbox units, for a session of one service sending to one subscriber, said forwarding comprising hashing service header information of said packets; and
forwarding packets from said mailboxes to said external interface units and from said external interface units to their respective associated subscribers (50).

10. The method according to claim 9, and wherein each said mailbox is defined by the buffering and quality of service requirements of its associated service.

11. The method according to claim 10, and wherein said method includes receiving qualities of each said mailbox from network service management tables.

12. The method according to any one of claims 9, 10, and 11, and also comprising instantiating mailboxes per network service management tables in the presence of network activity.

13. The method according to any one of claims 9 to 12, and wherein said forwarding to a mailbox comprises reading a header of each said incoming packet, hashing service header information to generate a mailbox address for each said incoming packet and writing each said incoming packet to its associated said mailbox address.

14. The method according to any one of claims 9 to 13, and wherein said writing includes one of a DMA (direct memory access) and an rDMA (remote DMA) operation.

15. The method according to any one of claims 9 to 14, and wherein said writing includes writing a multicast datastream to one mailbox in one of said mailbox units of said network.

16. The router according to claim 5 or the method according to claim 12 and wherein said network activity is one of the following actions: DHCP (dynamic host configuration protocol) registration and IGMP (IP group management protocol) registration.

17. The router according to any one of claims 1 to 8, or the method according to any one of claims 9 to 16, and wherein said services comprise at least one of the following types of services: point-to-point, point-to-multipoint and multipoint-to-multipoint.

## Patentansprüche

1. Router für ein Paketnetzwerk, der aufweist:
mehrere Briefkasteneinheiten (46), die jeweils wenigstens einen Teil von Datenpaket-Pufferbriefkästen (22) aufnehmen, wobei der Router die Briefkästen für ein Netzwerk definiert, **dadurch gekennzeichnet, dass**:
jeder Briefkasten für eine Sitzung eines Dienstes definiert ist, der an einen Teilnehmer (50) gesendet wird; und
ferner durch mehrere externe Schnittstelleneinheiten (44) gekennzeichnet, um ankommende Pakete über Hash-Ergebnisse für Dienstanfangsblockinformationen der Pakete an eine der Briefkasteneinheiten des Netzwerks weiter zu leiten und abgehende Pakete von Briefkästen der Briefkasteneinheit an ihre zugehörigen Teilnehmer weiter zu leiten.

2. Router nach Anspruch 1, der ferner aufweist:
eine Einrichtung (30) zum Managen der Puffer- und Dienstqualitätsanforderungen der Briefkästen sowie deren Vorhandensein.

3. Router nach Anspruch 1 oder 2, wobei jeder Briefkasten durch die Puffer- und Dienstqualitätsanforderungen seines zugehörigen Dienstes definiert ist.

4. Router nach einem der vorhergehenden Ansprüche, wobei die Briefkasteneinheit eine Einrichtung zum Empfangen von Qualitäten jedes Briefkastens von Netzdienst-Managementtabellen umfasst.

5. Router nach Anspruch 4, der eine Managementeinheit aufweist, um bei vorhandener Netzaktivität wenigstens Briefkästen per Netzdienst-Managementtabelle zu instanziieren.

6. Router nach einem der vorhergehenden Ansprüche, wobei die externe Schnittstelleneinheit eine Schreibeinrichtung aufweist, um drei Arbeitsgänge, einen Lesearbeitsgang eines Anfangsblocks der ankommenden Daten, einen Hash-Arbeitsgang für eine Adresse der ankommenden Daten, um eine Briefkastenadresse zu erzeugen, und einen Schreibarbeitsgang der ankommenden Daten in die Briefkastenadresse, durchzuführen.

7. Router nach einem der vorhergehenden Ansprüche, wobei die externe Schnittstelleneinheit eine DMA (Direktspeicherzugriff-) und eine rDMA- (abgesetzte DMA-) Einheit aufweist.

8. Router nach einem der vorhergehenden Ansprüche, wobei die externe Schnittstelleneinheit eine Einrichtung aufweist, um einen Gruppenruf-Datenstrom in einen Briefkasten in einer der Briefkasteneinheiten des Netzwerks zu schreiben.

9. Verfahren, das aufweist:
innerhalb eines Netzrouters:
Bereitstellen von Briefkasteneinheiten und externen Schnittstelleneinheiten;
Empfangen von Datenpaketen an den externen Schnittstelleneinheiten;
Weiterleiten von ankommenden Datenpaketen von den externen Schnittstelleneinheiten an Datenpaket-Pufferbriefkästen (22) auf Netzwerkebene, wobei jeder Briefkasten innerhalb einer der Briefkasteneinheiten für eine Sitzung eines Dienstes, der an einen Teilnehmer gesendet wird, definiert ist, wobei das Weiterleiten das Hashen von Dienstanfangsblockinformationen der Pakete aufweist; und
Weiterleiten von Paketen von den Briefkästen an die externen Schnittstelleneinheiten und von den externen Schnittstelleneinheiten an ihre jeweiligen zugehörigen Teilnehmer (50).

10. Verfahren nach Anspruch 9, wobei jeder Briefkasten durch die Puffer- und Dienstqualitätsanforderungen seines zugehörigen Dienstes definiert ist.

11. Verfahren nach Anspruch 10, wobei das Verfahren das Empfangen von Qualitäten jedes Briefkastens von Netzdienst-Managementtabellen umfasst.

12. Verfahren nach einem der Ansprüche 9, 10 und 11, das auch das Instanziieren von Briefkästen per Netzdienst-Managementtabelle bei vorhandener Netzaktivität aufweist.

13. Verfahren nach einem der Ansprüche 9 bis 12, wobei das Weiterleiten an einen Briefkasten das Lesen eines Anfangsblocks jedes ankommenden Pakets, das Hashen von Dienstanfangsblockinformation, um eine Briefkastenadresse für jedes ankommende Paket zu erzeugen, und das Schreiben jedes ankommenden Pakets in seine zugehörige Briefkastenadresse aufweist.

14. Verfahren nach einem der Ansprüche 9 bis 13, wobei das Schreiben einen DMA- (Direktspeicherzugriff-) und einen rDMA- (abgesetzte DMA-) Arbeitsgang aufweist.

15. Verfahren nach einem der Ansprüche 9 bis 14, wobei das Schreiben das Schreiben eines Gruppenruf-Datenstroms in einen Briefkasten in einer der Briefkasteneinheiten des Netzwerks umfasst.

16. Router nach Anspruch 5 oder Verfahren nach Anspruch 12, wobei die Netzaktivität eine der folgenden Aktionen ist: DHCP- (dynamische Host-Konfigurationsprotokoll-) Registrierung und IGMP- (IP-Gruppenmanagementprotokoll-) Registrierung ist.

17. Router nach einem der Ansprüche 1 bis 8 oder Verfahren nach einem der Ansprüche 9 bis 16, wobei die Dienste wenigstens einen der folgenden Dienstarten aufweisen: Punkt-zu-Punkt, Punkt-zu-Mehrpunkt und Mehrpunkt-zu-Mehrpunkt.

## Revendications

1. Routeur pour un réseau de transmission de paquets, comprenant :
une pluralité d'unités de boîtes à lettres (46) pourvues chacune d'au moins une partie de boîtes à lettres -(22) de mise en tampon de paquets de données, ledit routeur définissant les boîtes à lettres pour un réseau, caractérisé en ce qui :
chaque boîte à lettres est définie pour une session d'un service adressé à un abonné (50) ; et
**caractérisé en outre par** une pluralité d'unités d'interface externes(44) pour adresser les paquets entrants vers une des unités de boîtes à lettres du réseau au moyen de résultats de hachage sur une information d'en-tête de service des paquets, et pour adresser les paquets sortants depuis des boîtes à lettres de l'unité de boîtes à lettres vers leurs abonnés associés.

2. Routeur selon la revendication 1, comprenant en outre :
un moyen (30) de gestion de la mise en tampon et de la qualité des spécifications de service des boîtes à lettres et de leur existence.

3. Routeur selon l'une des revendications 1 et 2, où chaque boîte à lettres est définie par la mise en tampon et les spécifications de qualité de service de son service associé.

4. Routeur selon l'une quelconque des revendications précédentes, où l'unité de boîte à lettres comprend un moyen de réception de qualités de chaque boîte à lettres depuis des tableaux de gestion de service du réseau.

5. Routeur selon la revendication 4, comprenant une unité de gestion, destinée au moins à instancier des boîtes à lettres par tableaux de gestion de service du réseau en présence d'une activité de réseau.

6. Routeur selon l'une quelconque des revendications précédentes, où l'unité d'interface externe comprend un moyen d'écriture pour exécuter trois opérations, une opération de lecture d'un en-tête des données entrantes, une opération de hachage d'une adresse des données entrantes pour générer une adresse de boîte à lettres, et une opération d'écriture des données entrantes vers l'adresse de boîte à lettres.

7. Routeur selon l'une quelconque des revendications précédentes, où l'unité d'interface externe comprend une unité de DMA (accès direct à la mémoire) et une unité de rDMA (accès direct à la mémoire distante).

8. Routeur selon l'une quelconque des revendications précédentes, où l'unité d'interface externe comprend un moyen d'écriture d'un flux de données multidestinataires vers une boîte à lettres dans une des unités de boîtes à lettres du réseau.

9. Procédé comprenant :
à l'intérieur d'un routeur de réseau :
présence d'unités de boîtes à lettres et d'unités d'interface externes ;
réception de paquets de données sur les unités d'interface externes ;
adressage de paquets de données entrantes depuis les unités d'interface externes vers des boîtes à lettres (22) de mise en tampon de paquets de données au niveau réseau, chaque boîte à lettres étant définie, à l'intérieur d'une des unités de boîtes à lettres, pour une session d'un service adressé à un abonné, ledit adressage comprenant le hachage d'une information d'en-tête de service des paquets ; et
adressage de paquets depuis les boîtes à lettres vers les unités d'interface externes et depuis les unités d'interface externes vers leurs abonnés associés respectifs (50).

10. Procédé selon la revendication 9, où chaque boîte à lettres est définie par la mise en tampon et les spécifications de qualité de service de son service associé.

11. Procédé selon la revendication 10, où ledit procédé comprend la réception de qualités de chaque boîte à lettres depuis des tableaux de gestion de service du réseau.

12. Procédé selon l'une quelconque des revendications 9, 10 et 11, et comprenant en outre l'instanciation de boîtes à lettres par tableaux de gestion de service du réseau en présence d'une activité de réseau.

13. Procédé selon l'une quelconque des revendications 9 à 12, où l'adressage vers une boîte à lettres comprend la lecture d'un en-tête de chaque paquet entrant, le hachage d'une information d'en-tête de service pour générer une adresse de boîte à lettres pour chaque paquet entrant, et l'écriture de chaque paquet entrant vers son adresse de boîte à lettres associée.

14. Procédé selon l'une quelconque des revendications 9 à 13, où l'écriture comprend une opération parmi une opération DMA (accès direct à la mémoire) et une opération rDMA (accès direct à la mémoire distante).

15. Procédé selon l'une quelconque des revendications 9 à 14, où l'écriture comprend l'écriture d'un flux de données multidestinataires vers une boîte à lettres dans une des unités de boîtes à lettres du réseau.

16. Routeur selon la revendication 5, ou procédé selon la revendication 12, où l'activité de réseau équivaut à une des actions suivantes : enregistrement DHCP (protocole de configuration dynamique d'hôte) et enregistrement IGMP (protocole de gestion de groupe internet).

17. Routeur selon l'une quelconque des revendications 1 à 8, ou procédé selon l'une quelconque des revendications 9 à 16, où les services comprennent au moins un des types de services suivants : point à point, point à multipoint et multi-point à multipoint.
